# EUROPEAN PATENT APPLICATION

(11) **EP 4 075 560 A1**
(43) Date of publication of application: **19.10.2022**
(21) Application number: 22163609.5
(22) Date of filing: 22.03.2022
(51) Int. Cl.: H01M 10/0567, H01M 10/0525, H01M 10/42

(54) **ELECTROLYTE SOLUTION FOR LITHIUM SECONDARY BATTERY AND LITHIUM SECONDARY BATTERY INCLUDING THE SAME**

(30) Priority: 13.04.2021 KR 20210047942
(71) Applicant: SK On Co., Ltd., Seoul 03188 (KR)
(72) Inventor: CHO, In Haeng, 34124 Daejeon (KR); SHIM, Yu Na, 34124 Daejeon (KR); LEE, Jin Hong, 34124 Daejeon (KR); HAN, Su Hee, 34124 Daejeon (KR)
(74) Representative: Stolmár & Partner Patentanwälte PartG mbB

(57) **Abstract**

An electrolyte solution for a lithium secondary battery includes an organic solvent, a lithium salt, and an additive including a compound represented by Chemical Formula 1. A lithium secondary includes the electrolyte solution and has improved capacity retention at room temperature and high temperature storage properties such as increased capacity retention and capacity recovery and an suppressed resistance and thickness.

## Description

### CROSS-REFERENCE TO RELATED APPLICATION AND CLAIM OF PRIORITY

This application claims priority to Korean Patent Applications No. 10-2021-0047942 filed on April 13, 2021 in the Korean Intellectual Property Office (KIPO), the entire disclosure of which is incorporated by reference herein.

### BACKGROUND

### 1. Field

The present invention relates to an electrolyte solution for a lithium secondary battery and a lithium secondary battery including the same. More particularly, the present invention relates to an electrolyte solution for a lithium secondary battery including an organic solvent, a lithium salt and an additive, and a lithium secondary battery including the same.

### 2. Description of the Related Art

A secondary battery which can be charged and discharged repeatedly has been widely employed as a power source of a mobile electronic device such as a camcorder, a mobile phone, a laptop computer.

A lithium secondary battery is highlighted and developed among various types of secondary batteries due to high operational voltage and energy density per unit weight, a high charging rate, a compact dimension, etc.

For example, the lithium secondary battery may include an electrode assembly including a cathode, an anode and a separation layer, and an electrolyte solution immersing the electrode assembly.

The lithium secondary battery may further include an outer case having, e.g., a pouch shape for accommodating the electrode assembly and electrolyte solution.

For example, the cathode of the lithium secondary batteries may be fabricated by coating, drying and pressing a cathode slurry including a cathode active material, a binder, a conductive material, etc., on a cathode current collector.

The cathode active material may include a lithium metal oxide capable of reversibly intercalating and de-intercalating lithium ions.

While the lithium secondary battery is repeatedly charged and discharged, a structural deformation of the lithium metal oxide and a side reaction between the lithium metal oxide and an electrolyte may be caused. Accordingly, life-span properties (e.g., a capacity retention) of the lithium secondary battery may be deteriorated.

Further, when the lithium secondary battery is repeatedly charged and discharged at a high temperature or over-charged, stability of the lithium secondary battery may be further degraded.

For example, in Korean Published Patent Application No. 10-2019-0119615, an additive is included in an electrolyte solution for a lithium secondary battery to enhance performance of the lithium secondary battery.

### SUMMARY

According to an aspect of the present invention, there is provided an electrolyte solution for a lithium secondary battery having improved chemical stability.

According to an aspect of the present invention, there is provided a lithium secondary battery having improved life-span and high temperature properties.

An electrolyte solution for a lithium secondary battery according to exemplary embodiments includes an organic solvent, a lithium salt and an additive including a compound represented by Chemical Formula 1.

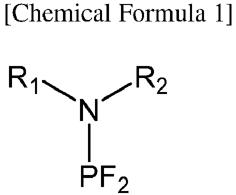

In Chemical Formula 1, R₁ and R₂ are each independently hydrogen, a substituted or unsubstituted C1-C10 alkyl group, a substituted or unsubstituted C2-C10 alkenyl group, a substituted or unsubstituted C2-C10 alkynyl group, a substituted or unsubstituted C5-C12 cycloalkyl group, a substituted or unsubstituted C5-C12 cycloalkenyl group, a substituted or unsubstituted 5-7 membered heterocycloalkyl group, a substituted or unsubstituted 5-7 membered heterocycloalkenyl group, a substituted or unsubstituted C6-C12 aryl group, or a substituted or unsubstituted 5-7 membered heteroaryl group, and R₁ and R₂ are capable of being connected with each other to form a ring structure.

In some embodiments, R₁ and R₂ may be each independently the substituted or unsubstituted C1-C10 alkyl group, the substituted or unsubstituted C2-C10 alkenyl group, the substituted or unsubstituted C5-C12 cycloalkyl group, or the substituted or unsubstituted C5-C12 cycloalkenyl group.

In some embodiments, R₁ and R₂ may be each independently the substituted or unsubstituted C1-C10 alkyl group.

In some embodiments, the electrolyte solution may further include an auxiliary additive. The auxiliary additive may include a fluorine-containing carbonate-based compound, a vinylidene carbonate-based compound, a lithium phosphate-based compound, a sultone-based compound, a sulfate-based compound, a borate-based compound, a nitrile-based compound, an amine-based compound, a silane-based compound and/or a benzene-based compound.

In some embodiments, the electrolyte solution may further include an auxiliary additive. The auxiliary additive may include a fluorine-containing carbonate-based compound, a vinylidene carbonate-based compound, a lithium phosphate-based compound and/or a sultone-based compound.

In some embodiments, the fluorine-containing carbonate-based compound may have a ring structure.

In some embodiments, the lithium phosphate-based compound may include a fluorine-containing lithium phosphate-based compound.

In some embodiments, the sultone-based compound may include an alkyl sultone-based compound and an alkenyl sultone-based compound.

In some embodiments, an amount of the auxiliary additive may be in a range from 1 wt% to 5 wt% based on a total weight of the electrolyte solution.

In some embodiments, a weight ratio of the auxiliary additive relative to the additive in the electrolyte solution may be from 1 to 5.

In some embodiments, an amount of the additive may be in a range from 0.5 wt% to 2 wt% based on a total weight of the electrolyte solution.

A lithium secondary battery according to exemplary embodiments includes an electrode assembly including a cathode and an anode facing the cathode, and the electrolyte solution for a lithium secondary battery according embodiments as described above impregnated with the electrode assembly.

An electrolyte solution for a lithium secondary battery according to exemplary embodiments may include a compound represented by Chemical Formula 1 as an additive. Accordingly, the electrolyte solution for a lithium secondary battery may form a solid-electrolyte interphase (SEI) having improved stability on a surface of the cathode. Thus, a side reaction between a cathode active material and the electrolyte solution may be suppressed to reduce or prevent an amount of a gas generation (e.g., generation of HF).

A lithium secondary battery according to exemplary embodiments may include the above-described electrolyte solution. Accordingly, the lithium secondary battery may have an improved capacity retention at room temperature, and may have enhanced capacity retention and capacity recovery in a high temperature storage while preventing an increase of a battery thickness and a resistance.

### BRIEF DESCRIPTION OF THE DRAWINGS

FIG. 1 is a schematic top planar view illustrating a lithium secondary battery in accordance with exemplary embodiments.
FIG. 2 is a schematic cross-sectional view illustrating a lithium secondary battery in accordance with exemplary embodiments.

### DETAILED DESCRIPTION OF THE EMBODIMENTS

According to example embodiments of the present invention, an electrolyte solution a lithium secondary battery including an additive of a predetermined chemical structure is provided. According to exemplary embodiments of the present invention, a lithium secondary battery including the electrolyte solution is also provided.

Hereinafter, the present invention will be described in detail with reference to examples and the accompanying drawings. However, those skilled in the art will appreciate that such embodiments described with reference to the examples and the drawings are provided to further understand the spirit of the present invention and do not limit subject matters to be protected as disclosed in the detailed description and appended claims.

The term "A-based compound" used herein may refer to a compound including a moiety expressed by "A" as a backbone or a substituent.

The term "Ca-Cb" used herein may indicate that the number of carbon atoms is from a to b.

The term "5-7 membered" used herein may indicate that the number of atoms forming a ring structure is from 5 to 7.

### <Electrolyte Solution for Lithium Secondary Battery>

An electrolyte solution for a lithium secondary battery (hereinafter, that may be abbreviated as an electrolyte solution) according to exemplary embodiments may include an organic solvent, a lithium salt and an additive.

In exemplary embodiments, the additive may include a compound represented by Chemical Formula 1.

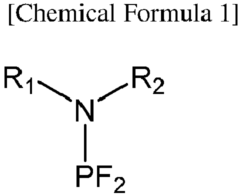

In Chemical Formula 1, R₁ and R₂ may be each independently hydrogen, a substituted or unsubstituted C1-C10 alkyl group, a substituted or unsubstituted C2-C10 alkenyl group, a substituted or unsubstituted C2-C10 alkynyl group, a substituted or unsubstituted C5-C12 cycloalkyl group, a substituted or unsubstituted C5-C12 cycloalkenyl group, a substituted or unsubstituted 5-7 membered heterocycloalkyl group, a substituted or unsubstituted 5-7 membered heterocycloalkenyl group, a substituted or unsubstituted C6-C12 aryl group, or a substituted or unsubstituted 5-7 membered heteroaryl group.

For example, the electrolyte solution including the additive may be utilized, so that a capacity retention at room temperature of the lithium secondary battery may be improved. Additionally, a capacity retention and a capacity recovery in a high temperature storage of the lithium secondary battery may also be enhanced while suppressing an increase of a battery thickness and a resistance.

In some embodiments, R₁ and R₂ may be connected with each other to form a ring structure. For example, R₁ and R₂ may be connected to each other to form a substituted or unsubstituted 5-7 membered heterocycloalkyl group, a substituted or unsubstituted 5-7 membered heterocycloalkenyl group, or a substituted or unsubstituted 5-7 membered heteroaryl group.

For example, the alkyl group, the alkenyl group and the alkynyl group may each independently have a linear or branched structure. In the case of the branched structure, the number of carbon atoms may be 3 or more.

For example, the heterocycloalkyl group, the heterocycloalkenyl group and the heteroaryl group may each independently include at least one of N, O and S in the ring structure.

For example, R1 and R2 may further include a substituent.

For example, the substituent may include at least one of halogen, a C1-C6 alkyl group, a C1-C6 alkoxy group, a C3-C7 cycloalkyl group, a C6-C12 aryl group, a 5-7 membered heterocycloalkyl group, a 5-7 membered heteroaryl group, a hydroxyl group (-OH), -NR₃R₄ (R₃ and R₄ may each independently be hydrogen or a C1-C3 alkyl group), a nitro group (-NO₂), a cyano group (-CN), a thiocyanate group (-SCN) or an isothiocyanate group (-NCS).

In some embodiments, the substituent may be a halogen, the C1-C6 alkyl group, or the C3-C7 cycloalkyl group.

In an embodiment, R₁ and R₂ may each independently be a substituted or unsubstituted C1-C10 alkyl group, a substituted or unsubstituted C2-C10 alkenyl group, a substituted or unsubstituted C5-C12 cycloalkyl group or a substituted or unsubstituted C5-C12 cycloalkenyl group.

In some embodiments, R₁ and R₂ may each independently a substituted or unsubstituted C1-C6 alkyl group, a substituted or unsubstituted C2-C6 alkenyl group, a substituted or unsubstituted C5-C7 cycloalkyl group or a substituted or unsubstituted C5-C7 cycloalkenyl group.

In an embodiment, R1 and R2 may each independently be a substituted or unsubstituted C1-C10 alkyl group, or a substituted or unsubstituted C5-C12 cycloalkyl group.

In some embodiments, R₁ and R₂ may each independently be a substituted or unsubstituted C1-C6 alkyl group or a substituted or unsubstituted C5-C7 cycloalkyl group.

In an embodiment, R₁ and R₂ may each independently be a substituted or unsubstituted C1-C10 alkyl group. In some embodiments, R1 and R2 may each independently be a substituted or unsubstituted C1-C6 alkyl group. In this case, the capacity retention at room temperature and the high temperature storage properties of the lithium secondary battery may be further improved.

In some embodiments, R₁ and R₂ may be an unsubstituted C1-C6 alkyl group. For example, R1 and R2 may each independently be any one of a methyl group, an ethyl group, an n-propyl group, an iso-propyl group, an n-butyl group, an iso-butyl group, a pentyl group and a hexyl group.

In an embodiment, an amount of the additive may be in a range from 0.5 weight percent (wt%) to 2 wt% based on a total weight of the electrolyte solution. In this case, the lithium secondary battery may have more improved the capacity retention at room temperature and the high temperature storage properties.

In exemplary embodiments, the electrolyte solution for a lithium secondary battery may further include an auxiliary additive.

In an embodiment, the auxiliary additive may include a fluorine-containing carbonate-based compound, a vinylidene carbonate-based compound, a lithium phosphate-based compound, a sultone-based compound, a sulfate-based compound, a borate-based compound, a nitrile-based compound, an amine-based compound, a silane-based compound or a benzene-based compound. These may be used alone or in a combination therefrom.

For example, in the fluorine-containing carbonate-based compound, a fluorine atom or a fluorine atom-combined substituent (e.g., CF₃, etc.) may be bonded to at least one carbon atom of a carbonate-based compound.

In some embodiments, the fluorine-containing carbonate-based compound may include a fluorine-containing cyclic carbonate-based compound having a ring structure. For example, the fluorine-containing cyclic carbonate-based compound may have a 5-7 membered cyclic structure.

For example, the fluorine-containing cyclic carbonate-based compound may include fluoroethylene carbonate (FEC).

For example, the vinylidene carbonate-based compound may include at least one of vinylene carbonate (VC) and vinylethylene carbonate (VEC).

In some embodiments, the lithium phosphate-based compound may include a fluorine-containing lithium phosphate-based compound.

For example, in the fluorine-containing lithium phosphate-based compound, a fluorine atom or a fluorine atom-combined substituent (e.g., CF₃, etc.) may be bonded to a phosphorous atom of a lithium phosphate-based compound.

For example, the fluorine-containing lithium phosphate-based compound may include at least one of lithium difluoro phosphate (LiPO₂F₂) and lithium difluoro (bisoxalato) phosphate.

In some embodiments, the sultone-based compound may include at least one of an alkyl sultone-based compound and an alkenyl sultone-based compound.

In some embodiments, the sultone-based compound may include both an alkyl sultone-based compound and an alkenyl sultone-based compound.

For example, the alkyl sultone-based compound may include at least one of 1,3-propane sultone (PS) and 1,4-butane sultone.

For example, the alkenyl sultone-based compound may include at least one of ethenesultone, 1,3-propene sultone (PRS), 1,4-butene sultone and 1-methyl-1,3-propene sultone.

In some embodiments, the sulfate-based compound may include a cyclic sulfate-based compound including a ring structure. The cyclic sulfate-based compound may have a 5-7 membered cyclic structure.

For example, the cyclic sulfate-based compound may include at least one of ethylene sulfate (ESA), trimethylene sulfate (TMS) and methyltrimethylene sulfate (MTMS).

For example, the borate-based compound may include at least one of lithium tetraphenyl borate and lithium difluoro(oxalato) borate (LiODFB).

For example, the nitrile-based compound may include at least one of succinonitrile, adiponitrile, acetonitrile, propionitrile, butyronitrile, valeronitrile, caprylonitrile, heptanenitrile, cyclopentane carbonitrile, cyclohexane carbonitrile, 2- fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

For example, the amine-based compound may include at least one of triethanolamine and ethylene diamine.

For example, the silane-based compound may include tetravinyl silane.

For example, the benzene-based compound may include at least one of monofluorobenzene, difluorobenzene, trifluorobenzene and tetrafluorobenzene.

In an embodiment, the auxiliary additive may include the fluorine-containing carbonate-based compound, the vinylidene carbonate-based compound, the lithium phosphate-based compound and the sultone-based compound together. In this case, the capacity retention at room temperature and the high temperature storage properties of the lithium secondary battery may be further improved from a combination with the additive of Chemical Formula 1.

In some embodiments, the auxiliary additive may be included in an amount of 1 wt% to 5 wt% based on the total weight of the electrolyte solution. Within this range, the capacity retention at room temperature and the high temperature storage properties of the lithium secondary battery may be efficiently improved

In some embodiments, a weight ratio of the auxiliary additive relative to the the additive in the electrolyte solution may be from 1 to 5, preferably 1.25 to 4.75, more preferably 1.5 to 4.5, even more preferably from 1.75 to 3.5.

For example, the organic solvent may include, e.g., an organic compound that may provide a sufficient solubility for the lithium salt, the additive and the auxiliary additive and may not have a reactivity in the battery.

In an embodiment, the organic solvent may include a carbonate-based solvent, an ester-based solvent, an ether-based solvent, a ketone-based solvent, an alcohol-based solvent, an aprotic solvent, or the like. These may be used alone or in combination of therefrom.

The carbonate-based solvent may include, e.g., dimethyl carbonate (DMC), ethyl methyl carbonate (EMC), diethyl carbonate (DEC), methyl propyl carbonate, ethyl propyl carbonate, dipropyl carbonate, ethylene carbonate (EC), propylene carbonate (PC), butylene carbonate, etc. These may be used alone or in combination of therefrom.

The ester-based solvent may include, e.g., methyl acetate (MA), ethyl acetate (EA), n-propyl acetate (n-PA), 1,1-dimethylethyl acetate (DMEA), methyl propionate (MP), ethyl propionate (EP), gamma-butyrolactone (GBL), decanolide, valerolactone, mevalonolactone, caprolactone, etc. These may be used alone or in combination of therefrom.

The ether-based solvent may include, e.g., dibutyl ether, tetraethylene glycol dimethyl ether (TEGDME), diethylene glycol dimethyl ether (DEGDME), dimethoxyethane, tetrahydrofuran (THF), 2-methyltetrahydrofuran, etc. These may be used alone or in combination of therefrom.

The ketone-based solvent may include, e.g., cyclohexanone.

The alcohol-based solvent may include, e.g., ethyl alcohol, isopropyl alcohol, etc.

The aprotic solvent may include, e.g., a nitrile-based solvent, an amide-based solvent (e.g., dimethylformamide), a dioxolane-based solvent (e.g., 1,3-dioxolane), sulfolane, etc. These may be used alone or in combination of therefrom.

In some embodiments, the organic solvent may include the carbonate-based solvent. For example, the organic solvent may include at least one of ethylene carbonate (EC), ethylmethyl carbonate (EMC), dimethyl carbonate (DMC) and diethyl carbonate (DEC).

The electrolyte solution may include the lithium salt, and the lithium salt may be represented by Li⁺X⁻.

The anion (X⁻) of the lithium salt may include, e.g., F⁻, Cl⁻, Br⁻, I⁻, NO₃⁻, N(CN)₂⁻, BF₄⁻, ClO₄⁻, PF₆⁻, SbF₆⁻, AsF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc. These may be used alone or in a combination thereof.

In some embodiments, the lithium salt may include at least one of LiBF₄ and LiPF₆.

In an embodiment, the lithium salt may be included in a concentration from about 0.01 M to about 5 M, preferably from about 0.01 M to 2 M with respect to the organic solvent. Within the above range, a transfer of lithium ions and/or electrons may be promoted during charging and discharging of the lithium secondary battery.

### <Lithium Secondary Battery>

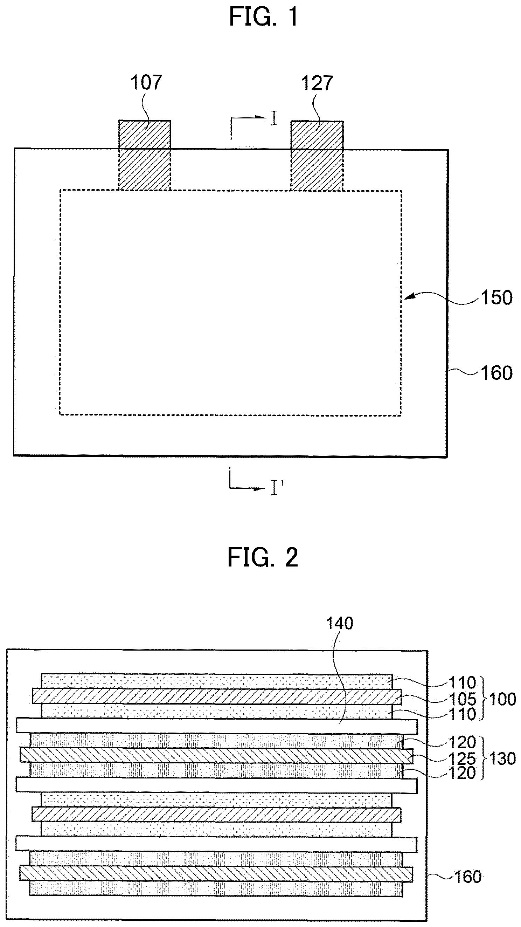

FIGS. 1 and 2 are a schematic top planar view and a schematic cross-sectional view, respectively, illustrating a lithium secondary battery in accordance with exemplary embodiments. Specifically, FIG. 2 is a cross-sectional view taken along line I-I' of FIG. 1.

Referring to FIGS. 1 and 2, a lithium secondary battery may include an electrode assembly 150 including a cathode 100, an anode 130 and a separation layer 140 interposed between the cathode and the anode. The electrode assembly 150 may be accommodated in a case 160 together with the electrolyte solution according to the above-described exemplary embodiments to be impregnated therein.

The cathode 100 may include a cathode current collector 105 and a cathode active material layer 110 formed on the cathode current collector 105.

For example, the cathode active material layer 110 may include a cathode active material layer and a cathode binder, and may further include a conductive material.

For example, a cathode slurry may be prepared by mixing and stirring the cathode active material in a solvent with the binder, the conductive material, a dispersive agent, etc. The cathode slurry may be coated on the cathode current collector 105, and then dried and pressed to form the cathode 100.

The cathode current collector 105 may include stainless-steel, nickel, aluminum, titanium, copper or an alloy thereof. Preferably, aluminum or an alloy thereof may be used.

The cathode active material may be a material capable of reversibly intercalating and de-intercalating lithium ions. The cathode active material may include, e.g., a lithium metal oxide including a metal element such as nickel, cobalt, manganese, aluminum, etc.

For example, the lithium metal oxide may be represented by Chemical Formula 2 below.

[Chemical Formula 2] LiₓNiₐCo_{b}M_{c}O_{y}

In Chemical Formula 3, M is at least one of Al, Zr, Ti, Cr, B, Mg, Mn, Ba, Si, Y, W, and Sr, and 0.9≤x≤1.2, 1.9≤y≤2.1, 0.5≤a≤1, 0≤c/(a+b)≤0.13.

For example, in Chemical Formula 2, 0≤c≤0.11.

In some embodiments, a content of nickel in the lithium metal oxide among elements other than lithium and oxygen may be 60 mol% or more, 70 mol% or more, 80 mol% or more, 83 mol% or more, or 85 mol% or more

For example, in Chemical Formula 2, 0.6≤a≤1, 0.7≤a≤1, 0.8≤a≤1, 0.83≤a≤1, or 0.85≤a≤1.

In some embodiments, the above-described cathode active material or the lithium metal oxide may further include a coating element or a doping element. For example, the coating element or the doping element may include Al, Ti, Ba, Zr, Si, B, Mg, P, Sr, W, La, an alloy thereof or an oxide thereof. These may be used alone or in combination therefrom. The cathode active material may be passivated by the coating element or the doping element, so that stability with respect to a penetration by an external object and life-span may be further improved.

For example, when the content of nickel in the lithium metal oxide is increased, chemical stability (e.g., the capacity retention at room temperature and high temperature storage properties) may be relatively deteriorated. However, in the case of the battery including the electrolyte solution according to exemplary embodiments, improved capacity retention at room temperature and high-temperature storage properties may be implemented even when the high-nickel lithium metal oxide (e.g., 80 mol% or more of Ni) is included.

The cathode binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

The conductive material may include, e.g., a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode current collector 125 and an anode active material layer 120 on the anode current collector 125.

The anode active material layer 120 may include an anode active material and an anode binder, and may further include a conductive material.

For example, the anode active material may be mixed and stirred together with the anode binder, the conductive material in a solvent to form an anode slurry. The anode slurry may be coated on the anode current collector 125, dried and pressed to obtain the anode 130.

For example. the anode current collector 125 may include gold, stainless-steel, nickel, aluminum, titanium, copper or an alloy thereof, preferably, may include copper or a copper alloy.

The anode active material may include a material which may be capable of adsorbing and ejecting lithium ions. For example, a carbon-based material such as a crystalline carbon, an amorphous carbon, a carbon complex or a carbon fiber, a lithium alloy, silicon-based material, etc., may be used.

The amorphous carbon may include a hard carbon, cokes, a mesocarbon microbead (MCMB) fired at a temperature of 1500 °C or less, a mesophase pitch-based carbon fiber (MPCF), etc. The crystalline carbon may include an artificial graphite, natural graphite, graphitized cokes, graphitized MCMB, graphitized MPCF, etc.

The silicon-based material may include, e.g., Si, SiOₓ(0<x<2), Si/C, SiO/C, Si-metal, etc.

The lithium alloy may further include aluminum, zinc, bismuth, cadmium, antimony, silicon, lead, tin, gallium, indium, etc.

The binder and the conductive material substantially the same as or similar to those mentioned above may also be used in the anode. In some embodiments, the anode binder may include, e.g., an aqueous binder such as styrene-butadiene rubber (SBR) for compatibility with the carbon-based active material, and may be used together with a thickener such as carboxymethyl cellulose (CMC).

The separation layer 140 may be interposed between the cathode 100 and the anode 130. In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation.

For example, the separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like.

The separation layer 140 may also include a non-woven fabric formed from a glass fiber with a high melting point, a polyethylene terephthalate fiber, or the like.

For example, an electrode cell may be defined by the cathode 100, the anode 130 and the separation layer 140, and a plurality of the electrode cells may be stacked to form the electrode assembly 150 that may have e.g., a jelly roll shape. For example, the electrode assembly 150 may be formed by winding, laminating or z-folding the separation layer 140.

The electrode assembly 150 may be accommodated together with the electrolyte solution according to exemplary embodiments in the case 160 to define a lithium secondary battery.

As illustrated in FIG. 1, a cathode protrusion and an anode protrusion may be formed from each of the cathode current collector 105 and the anode current collector 125, respectively, in each electrode cell. The cathode protrusions may be merged with each other to form a cathode tab, and the anode protrusions may be merged with each other to form an anode tab.

Electrode tabs including the cathode tab and the anode tab may extend to one end of the case 160. The electrode tabs may be welded together with the one end of the case 160 to form be connected to an electrode lead (a cathode lead 107 and an anode lead 127) exposed at an outside of the case 160.

FIG. 1 illustrates that the cathode lead 107 and the anode lead 127 protrude from an upper side of the outer case 160 in a planar view. However, positions of the electrode leads are not specifically limited. For example, the electrode leads may protrude from at least one of lateral sides of the case 160, or may protrude from a lower side of the case 160. Further, the cathode lead 107 and the anode lead 127 may protrude from different sides of the case 160.

The lithium secondary battery may be fabricated into, e.g., a cylindrical shape using a can, a prismatic shape, a pouch shape, a coin shape, etc.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Examples and Comparative Examples

### Example 1

### (1) Preparation of electrolyte solution

1.0 M solution of LiPF₆ (a mixed solvent of EC/EMC in a 25:75 volume ratio) was prepared. Based on a total weight of an electrolyte solution, 1 wt% of a compound represented by Chemical Formula 3 below was mixed as an additive in the LiPF₆ solution.

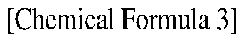

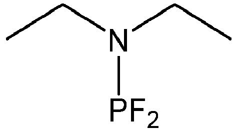

1 wt% of fluoroethylene carbonate (FEC), 0.3 wt% of vinylethylene carbonate, 0.7 wt% of LiPO₂F₂, 0.5 wt% of 1,3-propane sultone (PS) and 1 wt% of 1,3-propene sultone (PRS) were mixed as an auxiliary additive to prepare the electrolyte solution of Example 1.

### (2) Fabrication of lithium secondary battery sample

Li[Ni_{0.8}Co_{0.1}Mn_{0.1}]O₂, a carbon black and polyvinylidene fluoride (PVdF) were mixed in NMP by a weight ratio of 92:5:3 to prepare a cathode slurry.

The cathode slurry was uniformly coated on an area excluding a protrusion of an aluminum foil (thickness: 15 µm) having the protrusion (a cathode tab portion) on one side thereof, and then dried and pressed to form a cathode.

An anode slurry was prepared by mixing an anode active material including artificial graphite and natural graphite in a weight ratio of 7:3, a styrene-butadiene rubber (SBR) binder and a carboxymethyl cellulose (CMC) thickener in a distilled water by a weight ratio of 97:1:2.

The anode slurry was uniformly coated on an area excluding a protrusion of a copper foil (thickness: 15 µm) having the protrusion (an anode tab portion) on one side thereof, and then dried and pressed to form an anode.

An electrode assembly was formed by interposing a polyethylene separator (thickness: 20 µm) between the cathode and the anode. A cathode lead and an anode lead were welded and connected to the cathode tab and the anode tab, respectively.

The electrode assembly was accommodated in a pouch (case) such that portions of the cathode lead and the anode lead were exposed to an outside, and three sides except for an electrolyte injection side were sealed.

The electrolyte solution prepared in the above (1) was injected, and electrolyte injection side was also sealed, and impregnated for 12 hours to fabricate a lithium secondary battery sample.

### Example 2

A lithium secondary battery sample was fabricated by the same method as that in Example 1, except that the auxiliary additive was not added when preparing the electrolyte solution.

### Example 3

A lithium secondary battery sample was fabricated by the same method as that in Example 1, except that 0.5wt% of fluoroethylene carbonate, 0.15wt% of vinylethylene carbonate, 0.35wt% of LiPO₂F₂, 0.25wt% of 1,3-propane sultone and 0.5wt% of 1,3-propene sultone were added as the auxiliary additive when preparing the electrolyte solution.

### Example 4

A lithium secondary battery sample was fabricated by the same method as that in Example 1, except that 1.25wt% of fluoroethylene carbonate, 0.5wt% of vinylethylene carbonate, 1wt% of LiPO₂F₂, 0.75wt% of 1,3-propane sultone and 1.25wt% of 1,3-propene sultone were added as the auxiliary additive when preparing the electrolyte solution.

### Example 5

A lithium secondary battery sample was fabricated by the same method as that in Example 1, except that 1.25wt% of fluoroethylene carbonate, 0.75wt% of vinylethylene carbonate, 1wt% of LiPO₂F₂, 1wt% of 1,3-propane sultone and 1.25wt% of 1,3-propene sultone were added as the auxiliary additive when preparing the electrolyte solution.

### Comparative Example

A lithium secondary battery sample was fabricated by the same method as that in Example 1, except that the compound represented by Chemical Formula 3 was not added when preparing the electrolyte.

### Experimental Example 1: Evaluation on initial properties (room temperature, 25°C)

### (1) Evaluation on initial capacity

The secondary batteries of Examples and Comparative Example were charged (0.5C-rate CC/CV; 4.2V, 0.05C cut-off) and discharged (0.5C-rate CC; 2.7V cut-off) three times. A discharge capacity at the third cycle was measured as an initial capacity C1 of the battery.

### (2) Evaluation on initial thickness of battery

The batteries of Examples and Comparative Examples were charged (0.5C-rate CC/CV; 4.2V, 0.05C cut-off) at room temperature, and then an initial thickness T1 of the battery was measured using a plate thickness measuring device (Mitutoyo, 543-490B).

### (3) Evaluation on internal resistance (DCIR)

At an SOC 60% point, C-rate was changed to 0.2C, 0.5C, 1.0C, 1.5C, 2.0C, 2.5C and 3.0C, and discharging and recharging at the corresponding C-rate were performed for 10 seconds. A voltage termination point during the discharging and recharging was included in a linear equation, and a slope of the equation was measured as a DCIR.

### Experimental Example 2: Evaluation on capacity retention (Ret) at room temperature (25 °C)

The secondary batteries of Examples and Comparative Example were charged (CC/CV, 0.5C 4.3V 0.05C CUT-OFF) and discharged (CC, 1.0C 3.0V cut-off) 1,000 times. A discharge capacity C2 at the 1,000th cycle was measured.

The capacity retention at room temperature was calculated as follows.

Capacity retention at room temperature (%) = C2/C1×100 (%)

### Experimental Example 3: Evaluation on high temperature storage property

The batteries of Examples and Comparative Example were left to be exposed to an air at 60°C for 14 weeks using a thermostat, and further were left at room temperature for 30 minutes. Thereafter, properties after high temperature storage were evaluated as follows.

### (1) Evaluation on battery thickness after high-temperature storage

After charging the batteries of Examples and Comparative Example were stored at the high temperature, thicknesses T2 of the batteries were measured using a plate thickness measuring device (Mitutoyo, 543-490B).

An increasing ratio of a thickness after the high temperature storage was calculated as follows.

Increasing ratio of thickness = (T2-T1)/T1×100(%)

### (2) Evaluation of capacity retention (Ret) after high temperature storage

The charged batteries of Examples and Comparative Example were stored at the high temperature, and a 0.5C-rate CC discharge (2.7V cut-off) was performed to measure a discharge capacity C3.

The capacity retention was calculated as follows.

Capacity retention after high temperature storage (%) = C3/C1×100(%)

### (3) Evaluation of capacity recovery (Rec) after high temperature storage

After measuring the capacity retention after high temperature storage according to the above (2) for the batteries of Examples and Comparative Example, 0.5C-rate CC/CV charge (4.2V, 0.05C cut-off) and 0.5C-rate CC discharge (2.7V cut-off) were performed to measure a discharge capacity C4.

The capacity recovery was calculated as follows.

Capacity recovery after high temperature storage (%) = C4/C1×100(%)

The measurement results are shown in Tables 2 and 3 below.

**[Table 1]**

| | | Example 1 | Example 2 | Example 3 | Example 4 | Example 5 | Comparative Example |
|---|---|---|---|---|---|---|---|
| Initial Property | Capacity (mAh) | 1733 | 1706 | 1734 | 1729 | 1710 | 1739 |
| | Thickness (mm) | 5.22 | 5.25 | 5.17 | 5.28 | 5.40 | 5.41 |
| | DCIR (mΩ) | 39.3 | 39.9 | 39.6 | 39 | 41.6 | 39.4 |
| After high temperature storage (14 weeks) | Thickness (mm) | 6.53 | 7.47 | 6.83 | 6.4 | 6.31 | 8.12 |
| | Increasing ratio of thickness (%) | 25 | 42 | 32 | 21 | 17 | 50 |
| | Ret (%) | 86.4 | 74.7 | 86.7 | 85.7 | 84.8 | 76.0 |
| | Rec (%) | 87.5 | 75.9 | 87.7 | 86.6 | 85.8 | 77.8 |
| Capacity Retention at room temperature | Ret (%) | 82.8 | 79.2 | 83.9 | 82.1 | 80.8 | 78.6 |

Referring to Table 1, the secondary batteries of Examples provided improved capacity retention at room temperature and high-temperature storage properties (e.g., an increase of the capacity retention and the capacity recovery, and an inhibition of thickness and resistance increase) compared to those from the secondary batteries of Comparative Example.

In Examples 1, 3, 4 and 5, within a predetermined range of a weight ratio of the auxiliary additive relative to the additive in the electrolyte solution, more improved capacity retention at room temperature and high temperature storage properties were achieved.

## Claims

1. An electrolyte solution for a lithium secondary battery, comprising:
an organic solvent;
a lithium salt; and
an additive including a compound represented by Chemical Formula 1: 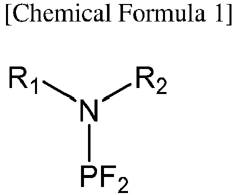
wherein, in Chemical Formula 1, R₁ and R₂ are each independently hydrogen, a substituted or unsubstituted C1-C10 alkyl group, a substituted or unsubstituted C2-C10 alkenyl group, a substituted or unsubstituted C2-C10 alkynyl group, a substituted or unsubstituted C5-C12 cycloalkyl group, a substituted or unsubstituted C5-C12 cycloalkenyl group, a substituted or unsubstituted 5-7 membered heterocycloalkyl group, a substituted or unsubstituted 5-7 membered heterocycloalkenyl group, a substituted or unsubstituted C6-C12 aryl group, or a substituted or unsubstituted 5-7 membered heteroaryl group, and
R₁ and R₂ are capable of being connected with each other to form a ring structure.

2. The electrolyte solution for a lithium secondary battery according to claim 1, R₁ and R₂ are each independently the substituted or unsubstituted C1-C10 alkyl group, the substituted or unsubstituted C2-C10 alkenyl group, the substituted or unsubstituted C5-C12 cycloalkyl group, or the substituted or unsubstituted C5-C12 cycloalkenyl group.

3. The electrolyte solution for a lithium secondary battery according to claim 1, wherein R₁ and R₂ are each independently the substituted or unsubstituted C1-C10 alkyl group.

4. The electrolyte solution for a lithium secondary battery according to claim 1, further comprising an auxiliary additive,
wherein the auxiliary additive includes at least one selected from the group consisting of a fluorine-containing carbonate-based compound, a vinylidene carbonate-based compound, a lithium phosphate-based compound, a sultone-based compound, a sulfate-based compound, a borate-based compound, a nitrile-based compound, an amine-based compound, a silane-based compound and a benzene-based compound.

5. The electrolyte solution for a lithium secondary battery according to claim 1, further comprising an auxiliary additive,
wherein the auxiliary additive includes at least one selected from the group consisting of a fluorine-containing carbonate-based compound, a vinylidene carbonate-based compound, a lithium phosphate-based compound and a sultone-based compound.

6. The electrolyte solution for a lithium secondary battery according to claim 5, wherein the fluorine-containing carbonate-based compound has a ring structure.

7. The electrolyte solution for a lithium secondary battery according to claim 5, wherein the lithium phosphate-based compound includes a fluorine-containing lithium phosphate-based compound.

8. The electrolyte solution for a lithium secondary battery according to claim 5, wherein the sultone-based compound includes an alkyl sultone-based compound and an alkenyl sultone-based compound.

9. The electrolyte solution for a lithium secondary battery according to claim 5, wherein an amount of the auxiliary additive is in a range from 1 wt% to 5 wt% based on a total weight of the electrolyte solution.

10. The electrolyte solution for a lithium secondary battery according to claim 5, wherein a weight ratio of the auxiliary additive relative to the additive in the electrolyte solution is from 1 to 5.

11. The electrolyte solution for a lithium secondary battery according to claim 1, wherein an amount of the additive is in a range from 0.5 wt% to 2 wt% based on a total weight of the electrolyte solution.

12. A lithium secondary battery, comprising:
an electrode assembly comprising a cathode and an anode facing the cathode; and
the electrolyte solution for a lithium secondary battery according to claim 1 impregnated with the electrode assembly.
